# FASCICULE DE BREVET EUROPEEN

(11) **EP 3 476 740 B1**
(45) Date de publication et mention de la délivrance du brevet: **18.03.2020**
(21) Numéro de dépôt: 18202377.0
(22) Date de dépôt: 24.10.2018
(51) Int. Cl.: B64D 27/26

(54) **STRUCTURE PRIMAIRE DE MÂT DE SUPPORT D'UN GROUPE PROPULSEUR D'AÉRONEF EN CAISSON FORMÉE PAR ASSEMBLAGE DE DEUX DEMI-COQUILLES**
PRIMÄRSTRUKTUR EINES HALTEMASTS EINER LUFTFAHRZEUG-ANTRIEBSGRUPPE MIT GEHÄUSE, DIE AUS ZWEI ZUSAMMENGEBAUTEN HALBSCHALEN GEBILDET WIRD
PRIMARY STRUCTURE OF MAST FOR SUPPORTING AN AIRCRAFT DRIVE UNIT IN A BOX, FORMED BY JOINING TWO HALF-SHELLS

(30) Priorité: 27.10.2017 FR 1760192
(43) Date de publication de la demande: 01.05.2019
(73) Titulaire: AIRBUS OPERATIONS (S.A.S), 31060 Toulouse (FR)
(72) Inventeur: COLMAGRO, Jérôme, 31500 Toulouse (FR); MOULIS, Julien, 31530 Le Castéra (FR)
(74) Mandataire: Gicquel, Olivier Yves Gérard

(56) Documents cités:
- EP-B1- 1 928 741
- WO-A1-2008/006826
- FR-A1- 3 042 475
- US-A1- 2011 121 132
- US-A1- 2014 151 497

## Description

La présente invention concerne le domaine des mâts de support d'un groupe propulseur d'aéronef.

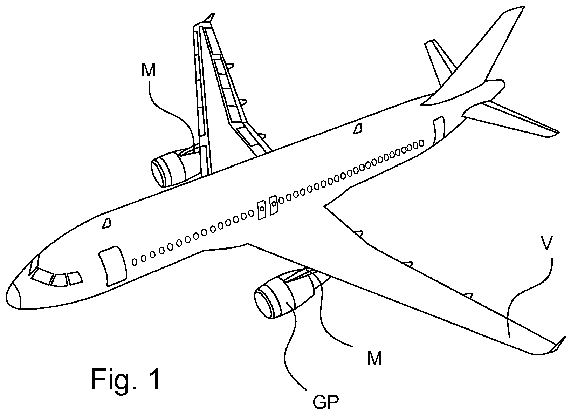

Dans un aéronef (représenté à titre d'exemple à la figure 1), un mât M est un élément qui constitue la liaison entre un ensemble de propulsion ou groupe propulseur GP, comportant un moteur et une nacelle, et la voilure V ou le fuselage de l'aéronef.

Le mât M de support de groupe propulseur d'aéronef comprend une structure primaire qui permet la reprise et la transmission des efforts auxquels est soumis le mât, et une structure secondaire correspondant essentiellement à un carénage aérodynamique qui n'a pas de rôle structural. Le carénage ou structure secondaire permet d'accueillir les câblages et tuyauteries reliant un groupe propulseur au reste de l'aéronef.

La structure primaire comporte de manière connue une structure générale en caisson. Elle présente en particulier un certain nombre de nervures sensiblement parallèles. Pour former la structure primaire, des longerons (supérieur et inférieur) et des plaques latérales sont fixées sur les nervures, ce qui permet d'obtenir une structure en caisson. Une telle structure en caisson de la structure primaire confère au mât une grande raideur et une grande résistance, nécessaires à la transmission des efforts entre le groupe propulseur et la structure de l'aéronef, tout en garantissant une masse faible.

La structure primaire du mât M comporte en outre des attaches destinées à la liaison du mât à la structure de l'aéronef d'une part, et au groupe propulseur GP d'autre part.

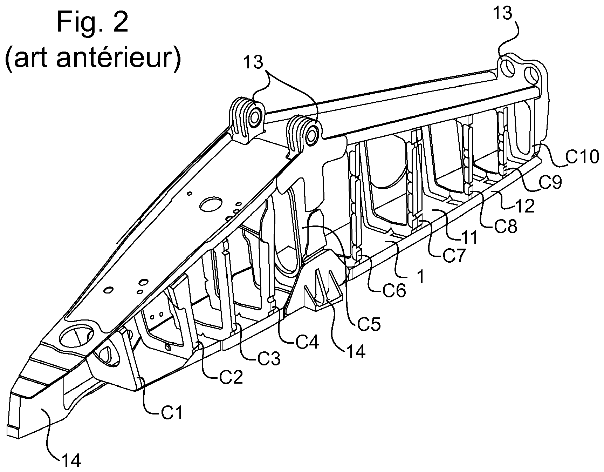

Par exemple, afin de constituer la structure primaire d'un mât pour groupe propulseur d'aéronef, on forme comme illustré à la figure 2 ci-annexée une ossature en rapportant des nervures C1 à C10 sur un longeron inférieur 1. Plus particulièrement, la figure 2 présente une structure primaire d'un mât pour groupe propulseur d'aéronef, dans lequel les plaques latérales d'un côté ont été omises pour laisser la structure interne apparente.

Le longeron inférieur 1 comporte une surface inférieure 11, et peut comporter des flancs longitudinaux 12, ce qui lui confère une certaine rigidité et lui permet de servir de pièce de base pour la réalisation de l'ossature du mât.

Les nervures C1 à C10 sont assemblées sur le longeron inférieur 1, en respectant une conformation géométrique précise. Les nervures C1 à C10 sont alignées longitudinalement, et installées chacune transversalement, selon une direction orthogonale à la direction longitudinale. Au niveau du longeron inférieur 1, les bases des nervures C1 à C10 donc parallèles entre elles. Les nervures sont installées verticalement pour certaines (nervures C5 à C10 dans l'exemple représenté) ou de manière légèrement inclinée par rapport à la verticale (nervures C1 à C4, l'horizontale étant matérialisée par le longeron inférieur 1).

Sur l'ossature ainsi constituée, divers moyens d'ancrage ou diverses attaches (pour la liaison à un groupe propulseur d'une part, et à une structure d'aéronef, d'autre part) sont rapportés et fixés sur l'ossature, sur les nervures en particulier. Un longeron supérieur (en une ou deux parties) est ajouté, ainsi que des plaques latérales.

Les différents éléments constitutifs sont assemblés par rivetage.

La structure primaire du mât a ainsi une structure générale en caisson, et comporte des attaches de liaison avec la structure d'un aéronef 13 et des attaches de liaison avec un groupe propulseur d'aéronef 14.

Le document EP1928741 divulgue une structure primaire de mât pour groupe propulseur d'aéronef à l'architecture simplifiée par l'emploi d'un cadre monolithique. L'industrialisation d'une telle structure primaire est cependant complexe. En outre, cette structure peut être améliorée plus encore afin d'offrir des possibilités d'optimisation de l'architecture de l'aéronef. Le document US2014/0151497 divulgue également une structure de mât de support d'un groupe propulseur d'aéronef.

L'invention vise ainsi à proposer une structure alternative, simple et offrant des possibilités d'optimisation architecturales, pour une structure primaire de mât de support d'un groupe propulseur d'aéronef.

L'invention porte ainsi sur une structure primaire de mât de support d'un groupe propulseur d'aéronef en caisson, telle que définie dans la revendication 1.

La constitution en deux demi-coquilles permet de réduire le prix de revient final de la structure primaire et du mât et offre des gains potentiels en termes de temps de cycle pour la production d'un mât de support de groupe propulseur d'aéronef. Elle permet l'obtention d'une structure en caisson très rigide, qui permet de limiter le nombre de nervures dans la structure primaire. La limitation du nombre de nervures libère également de l'espace à l'intérieur de la structure en caisson qui est formée, ce qui permet l'allocation de cet espace à d'autres fonctions que le maintien du groupe propulseur, par exemple au passage de conduits électriques, hydrauliques, ou de carburant. Les nervures peuvent permettre, par adaptation de leur nombre et de leur position, d'obtenir les caractéristiques mécaniques souhaitées en fonction du mode de réalisation considéré, et selon les caractéristiques mécaniques des parois latérales.

Les parois latérales peuvent présenter une structure alvéolaire.

Une telle structure primaire peut comporter en outre exactement trois nervures interposées transversalement dans le caisson.

Dans un premier mode de jonction, le premier bord libre est abouté au deuxième bord libre.

Dans un deuxième mode de jonction, le premier bord libre et le deuxième bord libre présentent une zone de recouvrement.

La structure primaire de mât de support d'un groupe propulseur d'aéronef peut comporter au moins une languette qui recouvre la jonction entre le premier bord libre et le deuxième bord libre, ladite languette étant liée à la première demi-coquille et à la deuxième demi-coquille.

L'invention porte également sur un procédé de fabrication d'une structure primaire de mât de support d'un groupe propulseur d'aéronef, tel que défini dans la revendication 7.

D'autres particularités et avantages de l'invention apparaîtront encore dans la description ci-après.

Aux dessins annexés, donnés à titre d'exemples non limitatifs :
- la figure 1 représente selon une vue schématique en trois dimensions un aéronef comportant un mât de support d'un groupe propulseur ;
- la figure 2 représente selon une vue schématique en trois dimensions une structure primaire de mât de support d'un groupe propulseur d'aéronef conforme à l'art antérieur ;
- la figure 3 représente selon une vue schématique en trois dimensions une structure primaire de mât de support d'un groupe propulseur d'aéronef conforme à un premier mode de réalisation de l'invention ;
- la figure 4 représente selon une vue éclatée la structure primaire de mât de support d'un groupe propulseur d'aéronef de la figure 3 ;
- les figures 5A et 5B représentent selon une vue en coupe schématique des modes alternatifs d'assemblage de deux demi-coquilles pouvant être employés dans le premier mode de réalisation de l'invention ;
- la figure 6 représente selon une vue schématique en trois dimensions une structure primaire de mât de support d'un groupe propulseur d'aéronef conforme à un deuxième mode de réalisation de l'invention ;
- la figure 7 représente selon une vue éclatée une structure primaire de mât de support d'un groupe propulseur d'aéronef de la figure selon une première variante du deuxième mode de réalisation ;
- la figure 8 représente selon une vue éclatée une structure primaire de mât de support d'un groupe propulseur d'aéronef de la figure selon une deuxième variante du deuxième mode de réalisation ;
- les figures 9A, 9B et 9C représentent des modes alternatifs d'assemblage de deux demi-coquilles pouvant être employés dans le deuxième mode de réalisation de l'invention ;
- la figure 10 représente selon une vue schématique en coupe un premier exemple de constitution d'une structure primaire de mât de support d'un groupe propulseur d'aéronef selon le deuxième mode de réalisation ;
- la figure 11 représente selon une vue schématique en coupe un deuxième exemple de constitution d'une structure primaire de mât de support d'un groupe propulseur d'aéronef selon le deuxième mode de réalisation ;
- la figure 12 représente selon une vue schématique en coupe un troisième exemple de constitution d'une structure primaire de mât de support d'un groupe propulseur d'aéronef selon le deuxième mode de réalisation.

La figure 1 et la figure 2 qui illustrent des éléments généraux ou correspondant à l'état de la technique ont été décrites ci-avant.

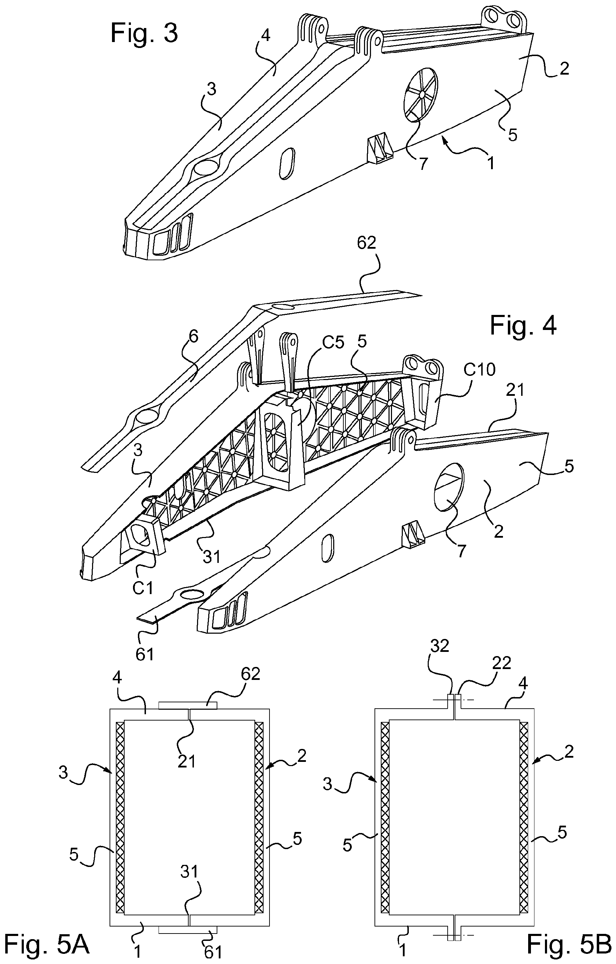

La figure 3 représente schématiquement une structure primaire de support d'un groupe propulseur d'aéronef conforme à un premier mode de réalisation de l'invention. La structure primaire de support d'un groupe propulseur d'aéronef représentée à la figure 3 comporte une première demi-coquille 2 et une deuxième demi-coquille 3 qui forment par assemblage une structure en caisson.

Quel que soit le mode de réalisation considéré, chaque demi-coquille correspond à une pièce tridimensionnelle qui comporte une zone ouverte délimitée par un bord libre. La zone ouverte est large comparativement aux dimensions de la demi-coquille, et peut correspondre à une face ouverte de ladite pièce. Chaque demi-coquille présente ainsi un volume intérieur accessible par la zone ouverte. Le premier bord libre 21 de la première demi-coquille 2 doit correspondre, au moins en majorité, au second bord libre 31 de la seconde demi-coquille 3 afin de permettre la jonction entre eux desdits premier et deuxième bords libres 21,31, de sorte à former le caisson de la structure primaire.

De manière générale, la structure en caisson comporte un longeron inférieur 1, un longeron supérieur 4, et deux parois latérales 5.

Dans le mode de réalisation de la figure 3, la première demi-coquille 2 et la deuxième demi-coquille 3 sont symétriques. Le longeron inférieur 1 et le longeron supérieur 4 sont divisés en deux par la jonction entre les deux demi-coquilles 2,3. Chaque demi-coquille comporte une face latérale 5, qui constitue en l'occurrence un fond pour chaque demi-coquille.

La structure primaire ayant une forme allongée qui s'étend dans une direction dite longitudinale, les demi-coquilles 2, 3 sont ainsi jointes entre elles au niveau d'un plan de joint parallèle à la direction longitudinale et orthogonal au longeron inférieur 1. Cela correspond à un plan de joint vertical ou sensiblement vertical, lorsqu'on considère l'installation finale de la structure primaire sous la voilure d'un aéronef.

L'assemblage des demi-coquilles est assuré ou renforcé à l'aide d'une languette 6 qui recouvre la jonction entre le premier bord libre 21 et le deuxième bord libre 31. La languette 6 est liée d'une part à la première demi-coquille et d'autre part à la deuxième demi-coquille. La languette 6 présente, dans l'exemple ici représenté, deux parties disjointes à savoir une portion inférieure de languette 61, assurant ou renforçant l'assemblage au niveau du longeron inférieur 1, et une portion supérieure de languette 62 assurant ou renforçant l'assemblage au niveau du longeron supérieur 4.

Cela correspond au mode d'assemblage représenté plus en détail à la figure 5A. Le premier bord libre 21 est abouté au deuxième bord libre 31. La portion inférieure de languette 61 et la portion supérieure de languette 62 sont assemblées, par rivetage, à la première demi-coquille 2 et à la deuxième demi-coquille 3.

Dans d'autres variantes du premier mode de réalisation, d'autres modes d'assemblage peuvent être employés. Par exemple, la figure 5B représente un second mode d'assemblage envisageable. Selon ce mode d'assemblage, le premier bord libre 21 comporte un premier rebord relevé 22 et le deuxième bord libre 31 comporte un deuxième bord relevé 32.

Le premier bord relevé 22 et le deuxième bord relevé 32 peuvent être mis en appui l'un sur l'autre et fixés l'un à l'autre. Cette fixation peut être réalisée par divers moyens, tels que des rivets traversant lesdits premier et deuxième rebords relevés, ou par soudure aux points.

La figure 4 illustre plus en détail par une vue en éclaté la constitution de la structure primaire de mât de support d'un groupe propulseur d'aéronef représenté à la figure 3. Dans la variante ici représentée, la structure primaire comporte seulement trois nervures interposées dans le caisson formé par assemblage des deux demi-coquilles 2,3. En effet, la configuration en caisson proposée dans l'invention permet la réduction du nombre de nervures employées dans la structure primaire.

Dans tous les modes de réalisation de l'invention, le nombre, la position et dans certains cas la constitution des nervures peuvent être adaptés selon les caractéristiques mécaniques recherchées pour la structure primaire à constituer.

Notamment, si les parois latérales 5 ont des propriétés mécaniques suffisantes, notamment une résistance à la flexion importante, seules trois nervures sont nécessaires comme dans l'exemple ici représenté :
- une nervure arrière C10 et une nervure centrale C5, qui peuvent notamment porter des attaches de liaison avec la structure d'un aéronef ou reprendre les efforts issus d'attaches de liaison avec la structure d'un aéronef, et
- une nervure avant C1, qui peut reprendre en partie les efforts issus d'attaches de liaison avec un groupe propulseur d'aéronef.

Au niveau de la nervure centrale C5, des attaches de liaison avec la structure de l'aéronef peuvent être monobloc avec ladite nervure centrale, ou rapportées à cette dernière (comme dans l'exemple de la figure 4).

Afin qu'ils présentent une rigidité grandement améliorée comparativement à un panneau plat, les panneaux formant les parois latérales 5 peuvent avoir une structure alvéolaire. En particulier, un panneau est dit à structure alvéolaire lorsqu'il comporte sur au moins une de ses faces des alvéoles, ou cavités ouvertes. Elles forment généralement un motif régulier sur une face (au moins) au panneau.

Les parois latérales 2 peuvent ainsi présenter une face intérieure alvéolaire, c'est-à-dire la face orientée vers l'intérieur du caisson de la structure primaire.

Deux types de panneaux alvéolaires sont plus particulièrement envisagés dans l'invention. Les parois latérales peuvent ainsi être notamment à structure dite ISOGRID ou à structure dite ORTHOGRID.

Une structure dite ISOGRID présente des alvéoles sensiblement en forme de triangles isocèles. Les angles des triangles y sont préférentiellement arrondis pour améliorer les performances mécaniques du panneau, et limiter les concentrations de contraintes. Une telle structure confère aux parois latérales une grande rigidité dans toutes les directions, mais est complexe à fabriquer.

Une structure dite ORTHOGRID présente des alvéoles sensiblement en forme de carré. Les caractéristiques mécaniques, notamment la rigidité, d'une telle structure sont moins grandes que pour la structure dite ISOGRID, mais une telle structure alvéolaire est plus simple, et potentiellement moins coûteuse à produire.

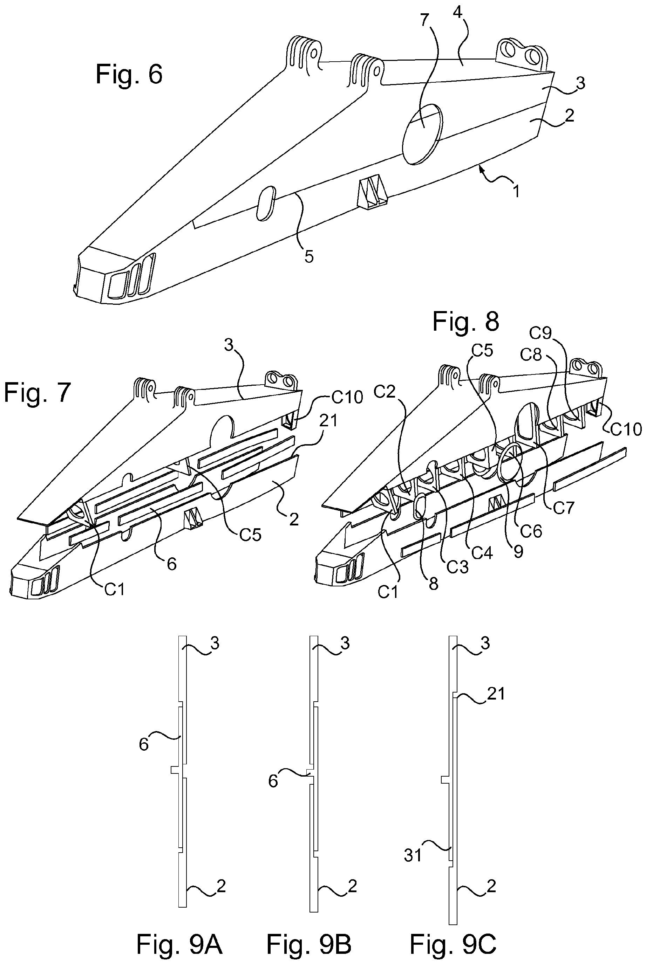

Lorsque les parois latérales 5 ont une structure alvéolaire ISOGRID ou analogue, la structure primaire finalement constituée peut ne présenter que trois nervures. Ces trois nervures sont typiquement la nervure arrière C10, la nervure centrale C5 et la nervure avant C1. Une structure primaire qui sera fortement sollicitée peut nécessiter la mise en œuvre de plus de nervures. Lorsque les parois latérales 2 ont une structure alvéolaire ORTHOGRID ou analogue, plus de trois nervures sont généralement nécessaires. Un exemple de structure primaire comportant dix nervures est décrit ci-après en référence à la figure 8 illustrant un second mode de réalisation de l'invention, mais un nombre de nervures supérieur à trois peut également être nécessaire dans le premier mode de réalisation illustré aux figures 3 et 4.

La figure 6 représente un second mode de réalisation de l'invention. Tout comme dans le premier mode de réalisation, la structure primaire de mât de support d'un groupe propulseur (GP) d'aéronef est une structure en caisson, comportant une première demi-coquille 2 et une deuxième demi-coquille 3. Comparativement au premier mode de réalisation, l'assemblage entre la première demi-coquille et la deuxième demi-coquille est réalisé selon un plan de joint qui s'étend également longitudinalement, c'est-à-dire selon la direction d'extension de la structure primaire, mais qui est orthogonal au plan de joint du premier mode de réalisation. En d'autres termes, selon le deuxième mode de réalisation, le plan de joint est parallèle au longeron inférieur 1. En d'autres termes, parois latérales étant sensiblement orthogonales au longeron inférieur, le plan de joint est orthogonal aux parois latérales et les divise chacune en deux parties.

Le premier longeron peut néanmoins ne pas être totalement plat, et dans ce cas le plan de joint peut être parallèle à une portion plane du longeron inférieur, ou il peut être parallèle au plan passant par les extrémités du longeron inférieur 1.

De manière générale, le second mode de réalisation représenté aux figures 6 à 8 présente un plan de joint sensiblement horizontal, lorsqu'on considère l'installation finale de la structure primaire sous la voilure d'un aéronef.

Le plan de joint est positionné environ à mi-hauteur du caisson formé. Ainsi, les parois latérales sont chacune divisées en deux par le plan de joint.

La figure 7 illustre par une vue en éclaté la constitution de la structure primaire de mât de support d'un groupe propulseur d'aéronef conforme à une variante du deuxième mode de réalisation. Dans la variante ici représentée, la structure primaire comporte seulement trois nervures interposées dans le caisson formé par assemblage des deux demi-coquilles 2,3. Les parois latérales 5 sont alvéolaires, par exemple de type ISOGRID, ou présentent une structure raidie analogue.

La figure 8 représente une autre variante du deuxième mode de réalisation. Comparativement à la variante de la figure 7, la structure primaire comporte un nombre de nervures plus important, identique ou proche du nombre de nervures employées dans l'état de la technique. En l'occurrence, dans la variante ici représentée, la structure primaire comporte dix nervures C1...C10 interposées dans le caisson formé par les deux demi-coquilles.

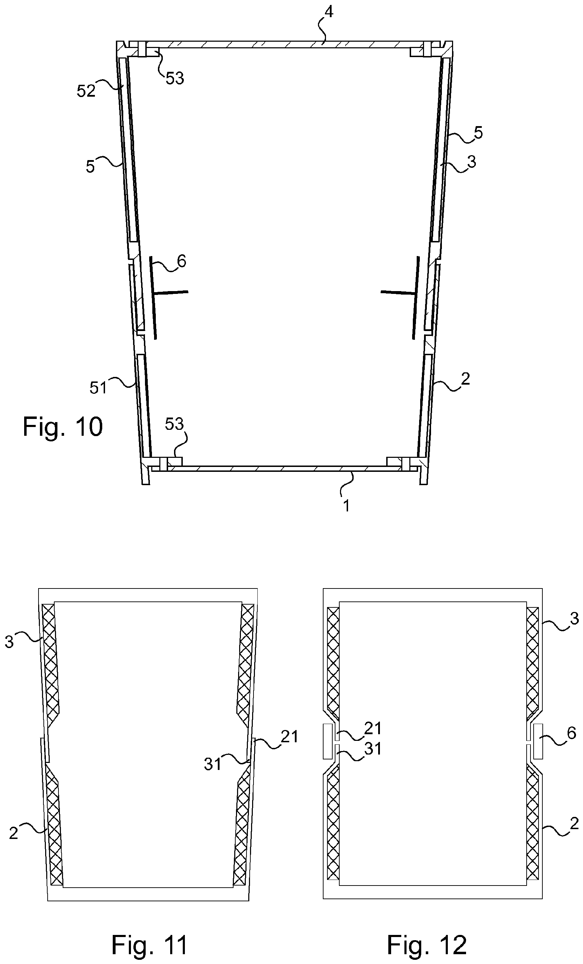

Dans le deuxième mode de réalisation, les nervures sont avantageusement portées avant assemblage des demi-coquilles par la deuxième demi-coquille 3, qui est la demi-coquille comportant le longeron supérieur 4. En effet, la structure primaire peut avantageusement présenter une section trapézoïdale, telle que présentée par exemple aux figure 10 et 11. Un positionnement initial dans la deuxième demi-coquille permet l'introduction des nervures dans la première demi-coquille, sans interférence mécanique, lors de la constitution de la structure primaire par assemblage des deux demi-coquilles 2,3. Néanmoins, dans certains modes de réalisation, les nervures dont la hauteur n'excèdent pas celle de la première demi-coquille, au niveau de leur implantation, peuvent être initialement liées à la première demi-coquille.

L'assemblage des demi-coquilles est assuré ou renforcé à l'aide d'une languette 6 qui recouvre la jonction entre le premier bord libre 21 de la première demi-coquille 2 et le deuxième bord libre 31 de la deuxième demi-coquille 3. La languette 6 est liée d'une part à la première demi-coquille et d'autre part à la deuxième demi-coquille. La languette 6 peut également être liée aux nervures, notamment à la nervure centrale C5.

La languette 6 présente, dans l'exemple ici représenté, plusieurs portions qui sont positionnées sur la jonction entre les demi-coquilles, au niveau des parois latérales 5. La languette 6 est composée de plusieurs portions, dans l'exemple représenté, afin de ne pas obturer des accès 7 ménagés dans les parois latérales 5 pour permettre un accès à l'intérieur du caisson de la structure primaire. De tels accès 7 peuvent être prévus dans tous les modes de réalisation de l'invention.

En particulier lorsqu'il est coupé par le plan de joint de la structure primaire, l'accès 7 peut être renforcé par un anneau périphérique 8.

Deux possibilités peuvent être envisagées pour l'assemblage d'un caisson employant une languette 6. La languette 6 peut être positionnée à l'extérieur du caisson, comme cela est représenté à la figure 9A, ou être positionnée à l'extérieur du caisson, comme cela est représenté à la figure 9B.

La languette 6 peut avoir une forme en T, tel que représenté aux figures 9A et 9B, afin d'en augmenter la rigidité et le cas échéant pour en favoriser la bonne mise en position.

Afin de garantir une surface lisse et régulière au niveau de la jonction entre les demi-coquilles 2,3, les bords libres 21, 31 peuvent être amincis sur une largeur permettant la mise en place de la languette 6. Par exemple, les bords libres peuvent être amincis chacun sur une largeur équivalente ou légèrement supérieure à la moitié de la largeur de la languette 6. Les bords libres peuvent être amincis chacun sur une profondeur correspondant à l'épaisseur de la languette 6. Un amincissement similaire des bords libres permettant une bonne mise en place de la languette peut être employé, le cas échéant, dans le premier mode de réalisation.

La figure 9C présente un autre mode d'assemblage pouvant être employé dans le deuxième mode de réalisation. Selon ce mode d'assemblage, les bords libres 21, 31, sont amincis chacun sur une même largeur, et sur une profondeur correspondant sensiblement à la moitié de leur épaisseur, l'un vers l'extérieur de sa demi-coquille et du caisson (le deuxième bord libre 31 dans l'exemple représenté) et l'autre vers l'intérieur de sa demi-coquille et du caisson (le premier bord libre 21 dans l'exemple représenté). Une zone de recouvrement existe ainsi entre les bords libres 21, 31, qui peuvent être directement liés l'un à l'autre.

La figure 10 présente plus en détail la constitution d'une structure primaire de mât de support d'un groupe propulseur d'aéronef selon le deuxième mode de réalisation et assemblée selon une variante du mode d'assemblage de la figure 9C. La structure primaire est représentée en coupe transversale, selon un plan de coupe perpendiculaire au longeron inférieur 1 et aux parois latérales 5. La première demi-coque 2 est formée par assemblage du longeron inférieur 1 et de demi-parois latérales inférieures 51. L'assemblage peut être réalisé par rivetage du longeron inférieur 1 sur un rebord 53 formé ou rapporté sur les demi-parois latérales inférieures 51. La deuxième demi-coque 3 est formée par assemblage du longeron supérieur 4 et de demi-parois latérales supérieures 52. L'assemblage peut être réalisé par rivetage du longeron supérieur 4 sur un rebord 53 formé ou rapporté sur les demi-parois latérales supérieures 52.

L'assemblage des demi-coquilles 2, 3 est réalisé par jonction des bords libres 21, 31 dans la zone de recouvrement. Néanmoins, une languette 6 de renfort est apposé à l'intérieur de la structure primaire. En effet, dans la zone de liaison entre les demi-coquilles, où les bords libres 21, 31 sont amincis, les parois latérales 5 ne peuvent pas présenter la structure alvéolaire qui les rigidifient. La languette 6, qui peut avoir avantageusement un profil en T, renforce la liaison et rigidifie la zone de liaison entre les demi-coquilles.

Les figures 11 et 12 illustrent deux exemples de modes de liaison entre la première demi-coquille 2 et la deuxième demi-coquille 3. Les figures 11 et 12 ne préjugent pas de la manière dont est constituée chaque demi-coquille, à savoir de manière monobloc ou par assemblage de demi-parois latérales sur un longeron. A la figure 11, la deuxième demi-coquille 3 présente une face supérieure ouverte permettant l'introduction du bord libre 21 de la première demi-coquille 2, bien que les bords libres ne soient pas amincis. Les bords libres 21, 31 sont ensuite liés entre eux par rivetage.

A la figure 12, les bords libres 21, 31 sont aboutés. L'assemblage est réalisé à l'aide d'une languette 6, liée par exemple par rivetage à chaque demi-coquille 2,3. Afin que la structure primaire ait une surface extérieure régulière, les bords libres 21, 31 présente une double pliure vers l'intérieur du caisson formé, de sorte à former une gorge dans laquelle la languette 6 est reçue.

Bien que les modes de réalisation décrits ci-dessus présentent l'assemblage des demi-coquilles selon un plan de joint, les bords libres peuvent présenter une forme tridimensionnelle plus complexe. Par exemple, la jonction peut être réalisée par une succession de plans de joints, ou le long d'une courbe quelconque, dès lors qu'il y a correspondance entre les bords libres 21, 31 de la première demi-coquille 2 et de la deuxième demi-coquille 3.

Quel que soit le mode de réalisation, plusieurs modes d'obtention de chaque demi-coquille peuvent être envisagés dans l'invention. Chaque demi-coquille peut être obtenue par assemblage, par exemple par rivetage ou soudage, de cloisons sur un substrat de base. Dans le premier mode de réalisation, le substrat est une paroi latérale 5, et on rapporte des demi-longerons aux bords de la paroi latérale 5 de sorte à former une demi-coquille.

Dans le deuxième mode de réalisation, le substrat de base est un longeron (inférieur ou supérieur) auquel sont rapportées deux demi-parois latérales.

Afin de permettre l'assemblage entre le substrat et les cloisons rapportées, ledit substrat ou ladite cloison peut comporter un rebord, issu de matière ou rapporté.

Alternativement à l'obtention des demi-coquilles par assemblage, les demi-coquilles peuvent être obtenues par impression tridimensionnelle sur un substrat. Ainsi, dans le premier mode de réalisation, des demi-longerons peuvent être formés par impression sur une paroi latérale 5 pour former une demi-coquille. Dans le deuxième mode de réalisation, des demis parois latérales sont formées par impression sur un longeron, afin de former une demi-coquille.

L'invention ainsi développée permet l'obtention d'une structure primaire de mât de support de groupe propulseur d'aéronef en caisson simple et permettant une réduction des coûts et/ou du temps et de la complexité d'assemblage dudit mât. La constitution en demi-coquilles permet de réduire le prix de revient final de la structure primaire et du mât et offre des gains potentiels en termes de temps de cycle pour la production d'un mât de support de groupe propulseur d'aéronef.

La limitation du nombre de nervures permise notamment par l'emploi de parois à structure alvéolaire libère également de l'espace à l'intérieur de la structure en caisson qui est formée, ce qui permet l'allocation de cet espace à d'autres fonctions que le maintien du groupe propulseur, par exemple au passage de conduits électriques, hydrauliques, ou de carburant.

## Revendications

1. Structure primaire de mât de support d'un groupe propulseur (GP) d'aéronef en caisson, ladite structure en caisson comporte
- une première demi-coquille (2) comportant un premier bord libre (21); et
- une deuxième demi-coquille (3) comportant un deuxième bord libre (31);
lesdites première demi-coquille (2) et deuxième demi-coquille (3) étant assemblées entre elles par jonction du premier bord libre (21) et du deuxième bord libre (31) suivant un plan de joint de sorte à former ledit caisson, la structure en caisson comportant un longeron inférieur (1), un longeron supérieur (4), et deux parois latérales (5), les deux parois latérales (5) étant sensiblement orthogonales au longeron inférieur (1), le plan de joint étant ou bien
orthogonal au longeron inférieur (1) le scindant longitudinalement en deux, de sorte à diviser le caisson en deux parties symétriques, ou bien orthogonal aux parois latérales (5) qu'il divise chacune en deux parties (51,52).

2. Structure primaire de mât de support d'un groupe propulseur d'aéronef selon la revendication 1, dans laquelle les parois latérales (5) présentent une structure alvéolaire.

3. Structure primaire de mât de support d'un groupe propulseur d'aéronef selon l'une des revendications précédentes, comportant en outre exactement trois nervures (C1, C5, C10) interposées transversalement dans le caisson.

4. Structure primaire de mât de support d'un groupe propulseur d'aéronef selon l'une des revendications précédentes, dans laquelle le premier bord libre (21) est abouté au deuxième bord libre (31).

5. Structure primaire de mât de support d'un groupe propulseur d'aéronef selon l'une des revendications 1 à 3, dans laquelle le premier bord libre (21) et le deuxième bord libre (31) présentent une zone de recouvrement.

6. Structure primaire de mât de support d'un groupe propulseur d'aéronef selon l'une des revendications précédentes, comportant au moins une languette (6) qui recouvre la jonction entre le premier bord libre (21) et le deuxième bord libre (31), ladite languette (6) étant liée à la première demi-coquille (2) et à la deuxième demi-coquille (3).

7. Procédé de fabrication d'une structure primaire de mât de support d'un groupe propulseur d'aéronef comportant les étapes de :
- formation d'une première demi-coquille (2) comportant un premier bord libre (21) et d'une deuxième demi-coquille (3) comportant un deuxième bord libre (31) ;
- assemblage de la première demi-coquille (2) et de la deuxième demi-coquille (3) par jonction du premier bord libre (21) et du deuxième bord libre (31) suivant un plan de joint de sorte à former une structure en caisson, la structure en caisson comportant un longeron inférieur (1), un longeron supérieur (4), et deux parois latérales (5), les deux parois latérales (5) étant sensiblement orthogonales au longeron inférieur (1), le plan de joint étant ou bien orthogonal au longeron inférieur (1) le scindant longitudinalement en deux, de sorte à diviser le caisson en deux parties symétriques, ou bien orthogonal aux parois latérales (5) qu'il divise chacune en deux parties (51,52).

## Patentansprüche

1. Kastenförmige Primärstruktur eines Pylons eines Luftfahrzeug-Triebwerks (GP), wobei die kastenförmige Struktur aufweist
- eine erste Halbschale (2), die einen ersten freien Rand (21) aufweist; und
- eine zweite Halbschale (3), die einen zweiten freien Rand (31) aufweist;
wobei die erste Halbschale (2) und die zweite Halbschale (3) durch Verbindung des ersten freien Rands (21) und des zweiten freien Rands (31) gemäß einer Trennebene zusammengebaut werden, um den Kasten zu bilden, wobei die kastenförmige Struktur einen unteren Längsträger (1), einen oberen Längsträger (4) und zwei Seitenwände (5) aufweist, wobei die zwei Seitenwände (5) im Wesentlichen orthogonal zum unteren Längsträger (1) sind, wobei die Trennebene
entweder
orthogonal zum unteren Längsträger (1) ist, indem sie ihn in Längsrichtung in zwei Teile aufteilt, um den Kasten in zwei symmetrische Teile zu teilen,
oder
orthogonal zu den Seitenwänden (5) ist, die sie je in zwei Teile (51, 52) teilt.

2. Primärstruktur eines Pylons eines Luftfahrzeug-Triebwerks nach Anspruch 1, wobei die Seitenwände (5) eine Wabenstruktur aufweisen.

3. Primärstruktur eines Pylons eines Luftfahrzeug-Triebwerks nach einem der vorhergehenden Ansprüche, die außerdem genau drei Stege (C1, C5, C10) aufweist, die in den Kasten quer zwischengefügt sind.

4. Primärstruktur eines Pylons eines Luftfahrzeug-Triebwerks nach einem der vorhergehenden Ansprüche, wobei der erste freie Rand (21) an den zweiten freien Rand (31) angefügt ist.

5. Primärstruktur eines Pylons eines Luftfahrzeug-Triebwerks nach einem der Ansprüche 1 bis 3, wobei der erste freie Rand (21) und der zweite freie Rand (31) einen Überdeckungsbereich aufweisen.

6. Primärstruktur eines Pylon eines Luftfahrzeug-Triebwerks nach einem der vorhergehenden Ansprüche, die mindestens eine Zunge (6) aufweist, die die Verbindung zwischen dem ersten freien Rand (21) und dem zweiten freien Rand (31) überdeckt, wobei die Zunge (6) mit der ersten Halbschale (2) und mit der zweiten Halbschale (3) verbunden ist.

7. Herstellungsverfahren einer Primärstruktur eines Pylons eines Luftfahrzeug-Triebwerks, das folgende Schritte aufweist:
- Bildung einer ersten Halbschale (2), die einen ersten freien Rand (21) aufweist, und einer zweiten Halbschale (3), die einen zweiten freien Rand (31) aufweist;
- Zusammenbau der ersten Halbschale (2) und der zweiten Halbschale (3) durch Verbindung des ersten freien Rands (21) und des zweiten freien Rands (31) entlang einer Trennebene, um eine kastenförmige Struktur zu bilden, wobei die kastenförmige Struktur einen unteren Längsträger (1), einen oberen Längsträger (4) und zwei Seitenwände (5) aufweist, wobei die zwei Seitenwände (5) im Wesentlichen orthogonal zum unteren Längsträger (1) sind, wobei die Trennebene
entweder orthogonal zum unteren Längsträger (1) ist, indem sie ihn in Längsrichtung aufteilt, um den Kasten in zwei symmetrische Bereich zu teilen,
oder orthogonal zu den Seitenwänden (5) ist, die sie je in zwei Teile (51, 52) teilt.

## Claims

1. Primary support-pylon box structure for an aircraft propulsion unit (GP), said box structure having
- a first half-shell (2) having a first free edge (21); and
- a second half-shell (3) having a second free edge (31) ;
said first half-shell (2) and second half-shell (3) being assembled together by joining the first free edge (21) and the second free edge (31) along a joint plane so as to form said box, the box structure having a lower spar (1), an upper spar (4), and two side walls (5), the two side walls (5) being substantially orthogonal to the lower spar (1), the joint plane being either orthogonal to the lower spar (1), splitting it longitudinally in two so as to divide the box into two symmetric parts, or orthogonal to the side walls (5), each of which it divides into two parts (51, 52).

2. Primary support-pylon structure for an aircraft propulsion unit according to Claim 1, wherein the side walls (5) have a cellular structure.

3. Primary support-pylon structure for an aircraft propulsion unit according to either of the preceding claims, also having exactly three ribs (C1, C5, C10) interposed transversely in the box.

4. Primary support-pylon structure for an aircraft propulsion unit according to one of the preceding claims, wherein the first free edge (21) is butted against the second free edge (31).

5. Primary support-pylon structure for an aircraft propulsion unit according to one of Claims 1 to 3, wherein the first free edge (21) and the second free edge (31) have an area of overlap.

6. Primary support-pylon structure for an aircraft propulsion unit according to one of the preceding claims, having at least one tongue (6) which covers the join between the first free edge (21) and the second free edge (31), said tongue (6) being connected to the first half-shell (2) and to the second half-shell (3).

7. Method for manufacturing a primary support-pylon structure of an aircraft propulsion unit, having the steps of:
- forming a first half-shell (2) having a first free edge (21) and of a second half-shell (3) having a second free edge (31);
- assembling the first half-shell (2) and the second half-shell (3) by joining the first free edge (21) and the second free edge (31) along a joint plane so as to form a box structure, the box structure having a lower spar (1), an upper spar (4), and two side walls (5), the two side walls (5) being substantially orthogonal to the lower spar (1), the joint plane being either orthogonal to the lower spar (1), splitting it longitudinally in two so as to divide the box into two symmetric parts, or orthogonal to the side walls (5), each of which it divides into two parts (51, 52).
